# EUROPÄISCHE PATENTSCHRIFT

(11) **EP 4 115 121 B1**
(45) Veröffentlichungstag und Bekanntmachung des Hinweises auf die Patenterteilung: **03.12.2025**
(21) Anmeldenummer: 20714479.1
(22) Anmeldetag: 03.03.2020
(51) Int. Cl.: F23G 5/46, F23G 5/00, F23G 7/06, C03B 5/00, C03B 5/02, C03B 37/05

(54) **INTEGRIERTE ANLAGE ZUR MÜLLVERBRENNUNG UND ZUR HERSTELLUNG VON STEINWOLLE UND VERFAHREN ZUM BETREIBEN DER ANLAGE**
INTEGRATED PLANT FOR REFUSE INCINERATION AND FOR PRODUCING ROCK WOOL, AND METHOD FOR OPERATING THE PLANT
INSTALLATION INTÉGRÉE D'INCINÉRATION DE DÉCHETS ET DE PRODUCTION DE LAINE DE ROCHE, ET PROCÉDÉ DE FONCTIONNEMENT DE L'INSTALLATION

(43) Veröffentlichungstag der Anmeldung: 11.01.2023
(73) Patentinhaber: Grenzebach BSH GmbH, 36251 Bad Hersfeld (DE); Petrurgia Eood, 1138 Sofia (BG)
(72) Erfinder: ULRICH, Maik, 36251 Bad Hersfeld (DE); TODOROV, Todor, 1700 Sofia (BG); GAITANSKI-YOUNG, Roumen, 1315 Sofia (BG)
(74) Vertreter: Prünte, Peter
(86) Internationale Anmeldenummer: PCT/EP2020/000055
(87) Internationale Veröffentlichungsnummer: WO 2021/175404

(56) Entgegenhaltungen:
- WO-A1-2007/002422
- CN-A- 102 180 593
- US-A1- 2008 104 887

## Beschreibung

Die Erfindung betrifft eine integrierte Anlage zur Müllverbrennung und zur Herstellung von Steinwolle in einer Steinwollherstellungsanlage, mit einer Müllverbrennungsanlage mit einer Verbrennungseinrichtung zur Erzeugung von Dampf, wenigstens einer nachgeschalteten Dampfturbine mit Stromgenerator zur Erzeugung von elektrischem Strom, und zur Erzeugung von Abprodukten. Strom, Dampf, aufbereitete Abprodukte der Müllverbrennungsanlage, aufbereitetes, schmelzfähiges Gestein oder Gesteinsgemisch sowie aufbereitete Abfallfasern und Stäube werden zum Betreiben einer Steinwollherstellungsanlage genutzt, wobei deren Abwärme und Abluft der Verbrennungseinrichtung der Müllverbrennungsanlage zugeführt werden. Die Erfindung betrifft des Weiteren ein Verfahren zum Betreiben der Anlage.

Industriegüterwracks aus Verbundwerkstoffen, wie Kraftfahrzeuge und Haushaltsgeräte, aber auch Öle, Batterien, Lacke, Farben, toxische Schlämme, Medikamente und Krankenhausabfälle unterliegen gesonderten, gesetzlich streng vorgeschriebenen Entsorgungsmaßnahmen. Hausmüll hingegen ist ein unkontrolliertes heterogenes Gemisch, das nahezu alle Arten von Sondermüllfraktionen und organischen Bestandteilen enthalten kann, dessen Entsorgung in keinem Verhältnis zu seiner Umweltbelastung steht.

In Deponien wird Hausmüll mangelhaft gelagert, Faulgase und Kohlendioxid entweichen unkontrolliert in die Atmosphäre, schadstoffhaltige Flüssigkeiten und Eluate der deponierten Abfälle verseuchen das Grundwasser.

Um die zu behandelnde Müllmenge zu reduzieren, ist bereits vorgeschlagen worden, die organischen Bestandteile aus Hausmüll und Klärschlämmen zu kompostieren. Dabei bleibt unbeachtet, dass diese eine Vielzahl heterogener organischer Substanzen und eine Vielzahl nicht abbaubarer toxischer Bestandteile wie Chemikalien, Arzneimittel- und Schwermetallrückstände enthalten, die im Kompost verbleiben und über Pflanzen und Tiere in den biologischen Kreislauf zurückgeführt werden.

Durch Recycling sogenannter Wertstoffe versucht man ebenfalls, die Müllmenge zu verringern. Unbeachtet hierbei bleiben die hohen Aufwendungen zum getrennten Sammeln und Aufbereiten dieser Abfälle; mit wiederholtem Recycling wachsen Kosten und Umweltbelastung bei reduzierter Verwertbarkeit der gewonnenen Produkte.

Abfallbeseitigungsverfahren gehen aus von der klassischen offenen Müllverbrennung in sogenannten Rostöfen, wobei teilweise versucht wird, die Verbrennungsrückstände, d.h. die unbrennbaren festen Reste und Schwermetalle in umweltverträgliche Form zu überführen (vgl. "Müll und Abfall", Ausg. 2/89, Seiten 64 bis 70).

Bei den bekannten Müllverbrennungsanlagen durchlaufen die Entsorgungsgüter ein breites Temperaturfeld, wobei ein großer Anteil der eingebrachten Stoffe verbrannt wird. Trotz des hohen technischen Aufwandes beim bekannten Stand der Technik verbleiben nach der Verbrennung ca. 40% des zu entsorgenden Mülls in Form von Aschen und Schlacken, die kostenintensiv entsorgt werden müssen. Um das zu deponierende Volumen zu reduzieren, ist es an sich bekannt, die metallischen Bestandteile der Reststoffe abzutrennen und einer gesonderten Verwertung zuzuführen.

Aus EP 0 520 086 A2 ist ein Verfahren zur Nutzbarmachung von Abfällen bekannt, bei dem Abfälle thermisch behandelt und einer vollständigen Stoffumwandlung zugeführt werden. Nach diesem Verfahren kann unsortierter, gegebenenfalls eine Vielzahl toxischer Komponenten enthaltender Müll aller Art mittels Hochtemperaturbehandlung in flüssige Form überführt werden und entsprechend ausgetragen und weiterbehandelt werden.

In US 4 957 049 A wird eine Müllverbrennungsanlage in Verbindung mit einer Dampfturbine offenbart, die den bei der Müllverbrennung entstehenden Wasserdampf zur Stromerzeugung nutzt.

CN 102 180 593 A offenbart eine Müllverbrennungsanlage. Gemäß US 2008/010887 A1 werden Reststoffe in einer Plasmaanlage zu inerter Schlacke umgewandelt. WO 2007/002422 A1 offenbart die Verarbeitung von Abfall in einer Plasmaanlage.

Es ist die Aufgabe der vorliegenden Erfindung, eine integrierte Anlage zur Müllverbrennung und zur Herstellung von Steinwolle zu schaffen, die gegenüber einer einzelnen Müllverbrennungsanlage und einer einzelnen Steinwollherstellungsanlage nach dem jeweiligen Stand der Technik eine noch höhere Effizienz aufweist. Erfindungsgemäß wird diese Aufgabe gelöst, wie in Patentanspruch 1 angegeben.

Ein Vorteil der Erfindung besteht darin, dass thermische und elektrische Energie in gleicher Weise ausgenutzt werden.

Durch den angekoppelten Prozess zur Herstellung von Steinwolle ist es möglich, gleichzeitig die Wärme der Abluft aus dem Steinwollherstellungsprozess thermisch in der Müllverbrennungsanlage zu nutzen und aufzubereiten. Schadstoffe werden thermisch unschädlich gemacht, während der Wärmeinhalt der Abluft ausgenutzt wird.

Bei der Zuführung von Müll in die Verbrennungseinrichtung wird beispielsweise vorgegangen, wie etwa aus EP 0661 368 A1 bekannt ist, wobei die vorliegende Erfindung bevorzugt auf die Entsorgung von Hausmüll gerichtet ist. Es werden hohe Entsorgungsleistungen auch bei kleiner Anlagenauslegung erreicht, ohne dass kostenintensive Vorbehandlungsverfahren, wie getrenntes Sammeln und technisch aufwendiges Aufbereiten, Shreddern, Trennen, Trocknen und Brikettieren, erforderlich sind. Die hierbei entstehenden Abprodukte werden einem Zerkleinerungs- und Mischvorgang unterworfen. Sodann werden sie einem Schmelzofen zugeführt.

Durch den Verbrennungsprozess in der Verbrennungseinrichtung entsteht ausreichend Dampf zum Betrieb einer Dampfturbine, die elektrischen Strom erzeugt, der dann wieder eingesetzt wird, um insbesondere den Elektroschmelzofen, gegebenenfalls einen elektrischen Erhitzer des Härteofens sowie alle elektrischen Antriebe der Steinwollherstellungsanlage zu betreiben.

Ebenso ist es auch von Vorteil, wenn Abluft aus dem Schmelzofen, der Sammelkammer, dem Härteofen, der Kühlzone und der Sägeeinrichtung eingesetzt wird, um sie jeweils der Verbrennungseinrichtung zuzuführen.

Erfindungsgemäß wird ein schmelzfähiges Gestein oder ein Gesteinsgemisch zur Herstellung sogenannter Steinwolle-Dämmstoffe einem Ofen zugeführt, der in der Regel als Elektroschmelzofen ausgebildet ist.

Mit Vorteil wird das schmelzfähige Gestein oder das Gesteinsgemisch zunächst einer Rohstoffaufbereitungsanlage zur Trocknung und/oder Vorwärmung zugeführt und aus dieser in den Schmelzofen eingebracht. Vorzugsweise wird die Abwärme der Verbrennungseinrichtung der Rohstoffaufbereitungsanlage zugeführt. Ebenso lässt sich die Abwärme der Verbrennungseinrichtung aber auch einer Anlage zur Aufbereitung von Faserabfall und Staub zuführen, um diese zu trocknen.

Gemäß DIN 4102, Teil 17, muss das schmelzfähige Gestein oder das Gesteinsgemisch einen Schmelzpunkt von mehr als 1000 °C aufweisen. Dämmstoffe aus Steinwolle können ausschließlich aus Gesteinen wie Diabas oder Basalt hergestellt werden, wobei Kalkgestein und/oder Dolomit als korrigierende Zuschläge hinzugefügt werden können. Diese Zuschläge können auch vollständig oder teilweise durch Hochofenschlacken und/oder andere Schlacken aus der Eisenindustrie ersetzt werden.

Neben den schmelzfähigen Gesteinen oder Gesteinsgemischen werden dem Elektroschmelzofen wenigstens teilweise auch die Abprodukte der Müllverbrennungsanlage zugeführt und gemeinsam zu einem einheitlichen Schmelzprodukt, d. h., zu erschmolzenem Gesteinsmaterial, verschmolzen, welches einer Spinnmaschine zugeführt wird. Durch den Spinnvorgang wird Steinwolle erzeugt.

Ebenso werden mit Vorteil Faserabfall von der Spinnmaschine und der Sammelkammer sowie Staub aus dem Härteofen, der Kühlzone und der Sägeeinrichtung einer Aufbereitungseinrichtung zugeführt, von der aus sie wieder in den Schmelzofen gelangen. Vorzugsweise wird der Aufbereitungseinrichtung Dampf aus der Verbrennungseinrichtung zum Trocknen des Faserabfalls und des Staubs zugeführt.

Vorzugsweise wird der Härteofen wenigstens weitgehend mit Dampf betrieben, der aus der Müllverbrennungsanlage stammt.

Ein anderer Vorteil der Erfindung besteht darin, dass die Müllverbrennungsanlage einen Kessel, beispielsweise einen Steilrohrkessel, umfasst, der seinerseits mit einem Wärmetauscher ausgestattet ist und der vorgewärmtes Kesselspeisewasser von einer Mantelkühleinrichtung des Elektroschmelzofens erhält. Die Mantelkühleinrichtung des Elektroschmelzofens wird von Kühlwasser durchflossen, das seinerseits durch den Kühlvorgang aufgeheizt wird und dann als Kesselspeisewasser der Müllverbrennungsanlage zugeführt wird.

Ein weiterer Vorteil der Erfindung besteht darin, dass durch den Steinwollherstellungsprozess mit Elektroschmelzofen im Gegensatz zu bekannten Kokskupolöfen kein zusätzliches Kohlendioxid erzeugt wird.

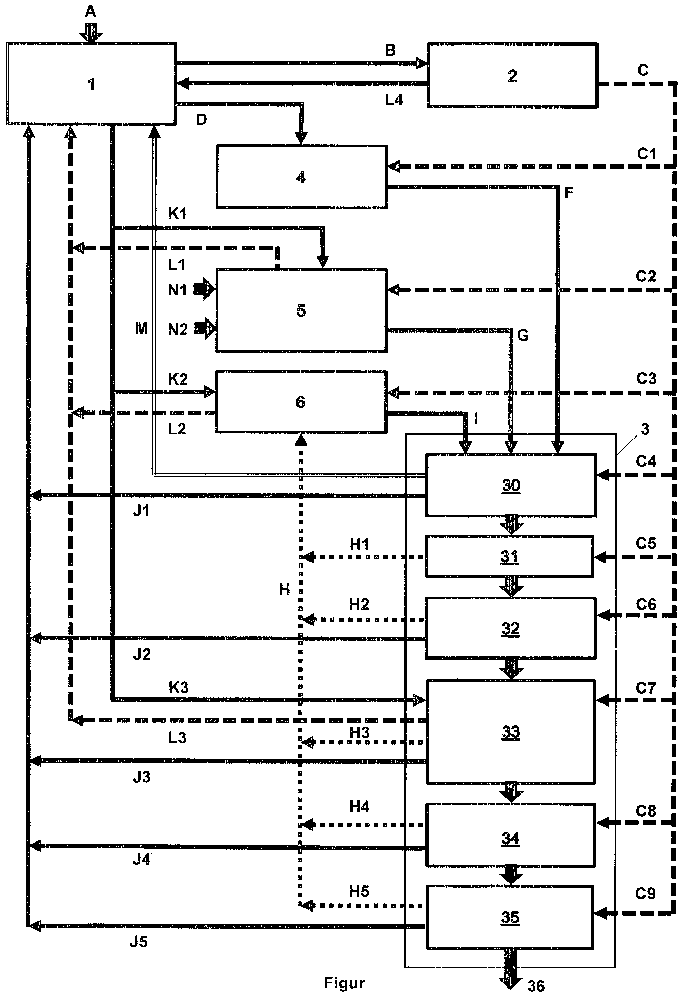

Vorteilhafte Weiterbildungen der Erfindung ergeben sich aus den Unteransprüchen und der nachfolgenden Beschreibung, insbesondere in Verbindung mit der Zeichnung.

Nachstehend wird die Erfindung anhand der Zeichnung näher erläutert. Die einzige Figur zeigt eine schematische Ansicht einer Anlage zur Müllverbrennung mit einer Verbrennungseinrichtung, die mit einer Steinwollherstellungsanlage gekoppelt ist.

Eine Müllverbrennungsanlage umfasst eine Verbrennungseinrichtung 1 (Figur), in der beispielsweise Hausmüll verbrannt wird, der der Einrichtung 1 in Richtung eines Pfeils A zugeführt wird. Dies schließt aber nicht aus, dass jegliche andere Formen von Müll, insbesondere Müll aus bestimmten Industriezweigen, in bestimmten Ausgestaltungen der Verbrennungseinrichtung 1 ebenfalls oder alternativ eingesetzt wird.

Bei der Müllverbrennung entstehender Dampf wird in Richtung eines Pfeils B einer Anlage 2 zur Stromerzeugung zugeführt. Die Anlage 2 umfasst beispielsweise Turbinen, die durch den Dampf angetrieben werden. Der in der Anlage 2 erzeugte Strom wird in Richtung eines Pfeils C, vornehmlich einer Anlage 3 zur Herstellung von Steinwolle zugeführt. Über eine Leitung L4 wird das durch die Abkühlung des Dampfs in der Anlage 2 entstehende Kondensat in einen Wärmetauscher der Einrichtung 1 zurückgeführt. Die Anlage 2 versorgt eine Mehrzahl von Aggregaten und Anlagen im Rahmen der gesamten Müllverbrennungsanlage mit Strom.

Die Anlage 3 umfasst einen Elektroschmelzofen 30, eine Spinnmaschine 31, eine Sammelkammer 32, einen Härteofen 33, eine Kühlzone 34 und eine Sägelinie 35, die jeweils einander nachgeordnet sind. Jedes einzelne der Aggregate 30 bis 35 erhält vorzugsweise Strom aus der Anlage 2, wie in der Figur durch die Pfeile C4 bis C9 angedeutet ist.

Andererseits erzeugt die Einrichtung 1 als Verbrennungsprodukte Abprodukte in Form von Asche oder Schlacken, die in Richtung eines Pfeils D einer Anlage 4 zur Aufbereitung dieser Abprodukte zugeführt werden. In der Anlage 4 werden die Abprodukte zerkleinert und gemischt, vorgewärmt und getrocknet. Auch die Anlage 4 erhält über eine Leitung C1 vorzugsweise Strom aus der Anlage 2. Die in der Anlage 4 erzeugten Abprodukte werden dem Schmelzofen 30 in Richtung eines Pfeils F zugeleitet.

Einer Anlage 5 zur Rohstoffaufbereitung , d. h., einer Rohstoffaufbereitungsanlage 5, werden Gesteine, beispielsweise Basalt und Dolomit oder Basalt und Hochofenschlacke über Förderbänder N1 bzw. N2, der Anlage 5 zugeführt und dann in getrockneter und vorgewärmter Form in Richtung eines Pfeils G dem Elektroschmelzofen 30 zugeführt, aus welchem verflüssigtes Gestein der Spinnmaschine 31 zugeführt wird. In dieser werden Gesteinsfasern gesponnen, die in die Sammelkammer 32 eingebracht werden. Aus dieser gelangen sie in den Härteofen 33, anschließend werden sie in der Kühlzone 34 wieder gekühlt; und in der Sägelinie 35 werden aus den Gesteinsfasern erzeugte Blöcke auf passende Maße gesägt. Die Anlage 5 erhält über eine Leitung C2 Strom aus der Anlage 2. Über eine Leitung M ist der Elektroschmelzofen 30 mit der Einrichtung 1 zur Zuführung von vorgewärmtem Kesselspeisewasser in den Kessel der Einrichtung 1 verbunden.

In der Spinnmaschine 31 und in der Sammelkammer 32 entstehender Faserabfall und in dem Härteofen 33, der Kühlzone 34 und der Sägelinie 35 entstehender Staub werden in Richtung eines Pfeils H über Leitungen H1 bis H5 einer Anlage 6 zur Aufbereitung von Faserabfall und zur Staubaufbereitung zugeführt. Aus dieser gelangt das getrocknete Gemisch aus Fasern und Staub in Richtung eines Pfeils I zu dem Elektroschmelzofen 30. Die Anlage 6 erhält über eine Leitung C3 Strom aus der Anlage 2.

Abluft aus dem Elektroschmelzofen 30, der Sammelkammer 32, dem Härteofen 33, der Kühlzone 34 und der Sägelinie 35 wird in Richtung von Pfeilen J1, J2, J3, J4 bzw. J5 zu der Einrichtung 1 zurückgeführt.

Andererseits wird Abwärme in Form von Dampf aus der Einrichtung 1 in Richtung eines Pfeils K1 zu der Anlage 5 zur Rohstoffaufbereitung und in Richtung eines Pfeils K2 zu der Anlage 6 zur Aufbereitung von Faserabfall und zur Staubaufbereitung zugeführt. Ebenso wird auch dem Härteofen 33 über eine Leitung K3 Dampf aus der Einrichtung 1 zugeführt, so dass er mit Dampf betrieben wird. Abgekühlt wird der Dampf als Kondensat aus den Anlagen 5, 6 und dem Härteofen 33 über Leitungen L1, L2 und L3 wieder zu der Einrichtung 1 zurückgeleitet.

Damit bildet die in der Figur dargestellte erfindungsgemäße Gesamtanlage eine Zusammenstellung verschiedener Aggregate zur integrierten Abwärme- und Abproduktennutzung bei der Verstromung von Müll und der gleichzeitigen Herstellung von Steinwolle 36 als Endprodukt der Steinwollherstellungsanlage. Durch die räumliche Nähe werden Wärmeverluste reduziert. Abluft, die bei der Herstellung der Steinwolle entsteht, wird in die Verbrennungseinrichtung 1 zurückgeführt. Andererseits werden die Edukte der Einrichtung 1 in Form von Dampf, Abwärme und Abprodukten möglichst vollständig weiterverwendet. Damit gelingt es, die Müllverbrennung mit der Herstellung von Steinwolle in unmittelbarer räumlicher Nähe zu verknüpfen, um dadurch einen in energetischer Hinsicht optimierten Ausstoß an Steinwolle zu erzielen.

Soweit erforderlich, kann der Anlage 3 jedoch zusätzliche Energie zugeführt werden, falls dies für den Einsatz der Rohstoffe erforderlich ist, die beispielsweise eine Nachbehandlungszeit in Form zusätzlicher Schmelzzeit benötigen.

Die Kraftwerksverbrennung in der Einrichtung 1 lässt sich zur Nachverbrennung von in der Abluft des Steinwollherstellungsprozesses auftretenden Schadstoffen nutzen.

Ein Vorteil der erfindungsgemäßen Anlage besteht darin, dass sie zusätzlich zu dem in dem Müll enthaltenen Energieinhalt keine fossilen Energieträger zur Energieerzeugung benötigt.

## Patentansprüche

1. Integrierte Anlage zur Müllverbrennung und zur Herstellung von Steinwolle, umfassend eine Steinwollherstellungsanlage und eine Müllverbrennungsanlage mit einer Verbrennungseinrichtung (1) zur Erzeugung von Dampf, der wenigstens einer Dampfturbine (2) zuführbar ist, und zur Erzeugung von Abprodukten,
wobei die Anlage derart angepasst ist,
dass die Abprodukte der Müllverbrennungsanlage wenigstens teilweise zusammen mit schmelzfähigen Gesteinen oder Gesteinsgemischen einem Schmelzofen (30) zuführbar sind,
dass die Abprodukte der Müllverbrennungsanlage wenigstens teilweise zusammen mit den schmelzfähigen Gesteinen oder den Gesteinsgemischen in dem Schmelzofen (30) gemeinsam zu einem einheitlichen Schmelzprodukt verschmelzbar sind,
dass das einheitliche Schmelzprodukt als erschmolzenes Gesteinsmaterial einer Spinnmaschine (31) zuführbar ist und
dass in der Spinnmaschine (31) durch einen Spinnvorgang Steinwolle herstellbar ist.

2. Integrierte Anlage nach Anspruch 1, welche derart angepasst ist,
dass das Gestein oder das Gesteinsgemisch einer Rohstoffaufbereitungsanlage (5) zur Trocknung und/oder Vorwärmung zuführbar und aus der Rohstoffaufbereitungsanlage (5) dem Schmelzofen (30) zuführbar ist.

3. Integrierte Anlage nach Anspruch 2, welche derart angepasst ist,
dass der Rohstoffaufbereitungsanlage (5) Abwärme aus der Verbrennungseinrichtung (1) zuführbar ist.

4. Integrierte Anlage nach einem der Ansprüche 1 bis 3, welche derart angepasst ist,
dass der in der Verbrennungseinrichtung (1) erzeugte Dampf wenigstens einer Anlage zur Stromerzeugung oder einer Dampfturbine (2) zuführbar ist.

5. Integrierte Anlage nach Anspruch 4, welche derart angepasst ist,
dass der von der wenigstens einen Dampfturbine (2) erzeugte Strom dem als Elektroschmelzofen ausgebildeten Schmelzofen (30) zuführbar ist.

6. Integrierte Anlage nach Anspruch 4 oder 5, welche derart angepasst ist,
dass von der wenigstens einen Anlage zur Stromerzeugung oder von der Dampfturbine (2) Dampfkondensat zu einem Kessel der Verbrennungseinrichtung (1) rückführbar ist.

7. Integrierte Anlage nach einem der Ansprüche 1 bis 6, welche derart angepasst ist,
dass zur Herstellung eines Steinwolleprodukts der Spinnmaschine (31) eine Sammelkammer (32), ein Härteofen (33), eine Kühlzone (34) und eine Sägeeinrichtung (35) nachgeordnet sind.

8. Integrierte Anlage nach Anspruch 7, welche derart angepasst ist,
dass Abluft aus dem Schmelzofen (30), der Sammelkammer (32), dem Härteofen (33), der Kühlzone (34) und der Sägeeinrichtung (35) jeweils der Verbrennungseinrichtung (1) zuführbar ist.

9. Integrierte Anlage nach Anspruch 8, welche derart angepasst ist,
dass Faserabfall aus der Spinnmaschine (31) und der Sammelkammer (32) sowie Staub aus dem Härteofen (33), der Kühlzone (34) und der Sägeeinrichtung (35) jeweils einer Rohstoffaufbereitungsanlage (5) zur Aufbereitung von Faserabfall und Staub zuführbar und aus dieser dem Schmelzofen (30) zuführbar ist.

10. Integrierte Anlage nach Anspruch 9, welche derart angepasst ist,
dass der Rohstoffaufbereitungsanlage (5) zur Aufbereitung des Rohstoffs und/oder einer Anlage (6) zum Trocknen von Faserabfall und zur Aufbereitung von Staub Abwärme aus der Verbrennungseinrichtung (1) zuführbar ist.

11. Integrierte Anlage nach einem der Ansprüche 1 bis 10, welche derart angepasst ist,
dass der Rohstoffaufbereitungsanlage (5) Basaltgestein oder Basaltgestein in Verbindung mit Dolomit oder Schlacke zuführbar ist.

12. Integrierte Anlage nach einem der Ansprüche 1 bis 11, welche derart angepasst ist,
dass aus der Rohstoffaufbereitungsanlage (5), aus der Anlage (6) zum Trocknen und aus dem Härteofen (33) Dampfkondensat zu einem Kessel der Verbrennungseinrichtung (1) rückführbar ist.

13. Integrierte Anlage nach einem der Ansprüche 1 bis 12, welche derart angepasst ist,
dass aus einer Kühleinrichtung des Schmelzofens Kesselspeisewasser einem Kessel in der Verbrennungseinrichtung (1) zuführbar ist.

14. Verfahren zum Betrieb einer integrierten Anlage zum Verbrennen von Müll in einer Müllverbrennungsanlage und zur Herstellung von Steinwolle in einer Steinwollherstellungsanlage, wobei die Müllverbrennungsanlage über eine Verbrennungseinrichtung (1) zum Erzeugen von Abprodukten und von Dampf, der wenigstens einer Dampfturbine (2) zugeführt wird, verfügt, wobei die Abprodukte der Müllverbrennungsanlage wenigstens teilweise zusammen mit schmelzfähigen Gesteinen oder Gesteinsgemischen einem Schmelzofen (30) zugeführt werden,
wobei die Abprodukte der Müllverbrennungsanlage wenigstens teilweise zusammen mit den schmelzfähigen Gesteinen oder den Gesteinsgemischen in dem Schmelzofen (30) gemeinsam zu einem einheitlichen Schmelzprodukt verschmolzen werden,
wobei das einheitliche Schmelzprodukt als erschmolzenes Gesteinsmaterial einer Spinnmaschine (31) zugeführt wird und
wobei in der Spinnmaschine (31) durch einen Spinnvorgang Steinwolle hergestellt wird.

15. Verfahren nach Anspruch 14,
wobei von der wenigstens einen Dampfturbine (2) Strom erzeugt wird, der den als Elektroschmelzofen ausgebildeten Schmelzofen (30) beheizt.

16. Verfahren nach Anspruch 14 oder 15,
wobei Abwärme aus der Verbrennungseinrichtung (1) einer Rohstoffaufbereitungsanlage (5) zur Aufbereitung von Gestein oder eines Gesteinsgemischs und/oder einer Anlage (6) zum Trocknen von Faserabfall und zur Aufbereitung von Staub zugeführt wird.

17. Verfahren nach einem der Ansprüche 14 bis 16,
wobei Abluft aus dem Schmelzofen (30), einer Sammelkammer (32), die der Spinnmaschine (31) nachgeordnet ist, aus einem Härteofen (33), einer Kühlzone (34) und/oder aus einer Sägeeinrichtung (35) zugeführt wird.

## Claims

1. Integrated plant for waste incineration and rock wool production, comprising a rock wool production plant and a waste incineration plant with a combustion device (1) for generating steam that can be supplied to at least one steam turbine (2), and for producing waste products, wherein the plant is adapted such
that the waste products from the waste incineration plant can be supplied at least partially together with meltable rocks or rock mixtures into a melting furnace (30),
that the waste products from the waste incineration plant can be melted at least partially together with the meltable rocks or rock mixtures in the melting furnace (30) to form a uniform molten product,
that the uniform molten product can be supplied as molten rock material to a spinning machine (31), and
that rock wool is producible in the spinning machine (31) by a spinning process.

2. Integrated plant according to claim 1, wherein the plant is adapted such that the rock or the rock mixture can be supplied to a raw material processing plant (5) for drying and/or preheating and can be supplied from the raw material processing plant (5) to the melting furnace (30).

3. Integrated plant according to claim 2, wherein the plant is adapted such that waste heat from the combustion device (1) can be supplied to the raw material processing system (5).

4. Integrated plant according to one of claims 1 to 3, wherein the plant is adapted such that in the steam generated in the combustion device (1) can be supplied to at least one system for generating electricity or to a steam turbine (2).

5. Integrated plant according to claim 4, wherein the plant is adapted such that the current generated by the at least one steam turbine (2) can be supplied to the melting furnace (30) designed as an electric melting furnace.

6. Integrated plant according to claim 4 or 5, wherein the plant is adapted such that steam condensate can be returned to a boiler of the combustion device (1) from the at least one system for generating electricity or from the steam turbine (2).

7. Integrated plant according to one of claims 1 to 6, wherein the plant is adapted such that a collecting chamber (32), a hardening furnace (33), a cooling zone (34) and a sawing device (35) are arranged downstream of the spinning machine (31) in order to produce a rock wool product of the spinning machine (31).

8. Integrated plant according to claim 7, wherein the plant is adapted such that exhaust air from the melting furnace (30), the collecting chamber (32), the hardening furnace (33), the cooling zone (34) and the sawing device (35) can each be supplied to the combustion device (1).

9. Integrated plant according to claim 8, wherein the plant is adapted such that fibre waste from the spinning machine (31) and the collecting chamber (32) as well as dust from the hardening furnace (33), the cooling zone (34) and the sawing device (35) can in each case be supplied to a raw material processing device (5) for processing fibre waste and dust and from the processing device (5) can be supplied to the melting furnace (30).

10. Integrated plant according to claim 9, wherein the plant is adapted such that the processing device (5) for processing the raw material and/or a drying device (6) for drying fibre waste and for processing dust can be supplied with waste heat from the combustion device (1).

11. Integrated plant according to one of claims 1 to 10, wherein the plant is adapted such that basalt rocks or basalt rocks in conjunction with dolomite or slag can be supplied to the raw material processing device (5).

12. Integrated plant according to one of claims 1 to 11, wherein the plant is adapted such that steam condensate can be returned to the boiler of the combustion device (1) from the raw material processing system (5), from the drying device (6) and from the hardening furnace (33).

13. Integrated plant according to one of claims 1 to 12, wherein the plant is adapted such that boiler feed water can be supplied to a boiler in the combustion device (1) from a cooling device of the melting furnace.

14. Method for operating an integrated plant for incinerating waste in a waste incineration plant and for producing rock wool in a plant for producing rock wool wherein the waste incineration plant comprises a combustion device (1) for producing waste products and steam, which is supplied to at least one steam turbine (2),
wherein the waste products from the waste incineration plant are at least partially supplied together with fusible rocks or rock mixtures into a melting furnace (30),
wherein the waste products from the waste incineration plant are at least partially melted together with the fusible rocks or rock mixtures in the melting furnace (30) to form a uniform melted product,
wherein the uniform molten product is supplied as molten rock material to a spinning machine (31), and
wherein rock wool is produced in the spinning machine (31) by a spinning process.

15. Method according to claim 14, wherein the at least one steam turbine (2) generates electric power which heats the melting furnace (30) designed as an electric smelting furnace.

16. Method according to claim 14 or 15, wherein waste heat from the combustion device (1) is supplied to a processing plant (5) for processing rock or a rock mixture and/or to a drying device (6) for drying fibre waste and for processing dust.

17. Method according to one of claims 14 to 16, wherein exhaust air from the melting furnace (30), from a collecting chamber (32), which is arranged downstream of the spinning machine (31), from a hardening furnace (33), from a cooling zone (34) and/or from a sawing device (35). is supplied.

## Revendications

1. Installation intégrée pour l'incinération des déchets et la production de laine de roche, comprenant une installation de production de laine de roche et une installation d'incinération des déchets avec un dispositif de combustion (1) pour produire de la vapeur qui peut être envoyée à au moins une turbine à vapeur (2) et pour produire des produits résiduels, l'installation étant adaptée de telle sorte
que les produits résiduels de l'installation d'incinération des déchets peuvent être acheminés au moins en partie avec des roches ou des mélanges de roches fusibles vers un four de fusion (30),
que les produits résiduels de l'installation d'incinération des déchets peuvent être fondus au moins en partie avec les roches ou les mélanges de roches fusibles dans le four de fusion (30) pour former un produit fondu homogène,
que le produit fondu homogène peut être acheminé sous forme de matériau rocheux fondu vers une machine à filer (31) et
que la machine à filer (31) permet de produire de la laine de roche par un processus de filage.

2. Installation intégrée selon la revendication 1, l'installation étant adaptée de telle sorte que la roche ou le mélange de roche peut être introduit dans une installation de traitement de matière première (5) pour le séchage et/ou le préchauffage et peut être alimenté depuis l'installation de traitement de matière première (5) jusqu'au four de fusion (30).

3. Installation intégrée selon la revendication 2, l'installation étant adaptée de telle sorte que la chaleur perdue provenant du dispositif de combustion (1) peut être fournie au système de traitement de matière première (5).

4. Installation intégrée selon l'une des revendications 1 à 3, l'installation étant adaptée de telle sorte que dans le dispositif de combustion (1), de la vapeur peut être générée qui peut être fournie à au moins un système pour générer de l'électricité ou à une turbine à vapeur (2).

5. Installation intégrée selon la revendication 4, l'installation étant adaptée de telle sorte que le courant généré par l'au moins une turbine à vapeur (2) peut être fourni au four de fusion (30) conçu comme un four à fusion électrique.

6. Installation intégrée selon la revendication 4 ou 5, l'installation étant adaptée de telle sorte que le condensat de vapeur peut être renvoyé à une chaudière du dispositif de combustion (1) par l'au moins un système pour générer de l'électricité ou par la turbine à vapeur (2).

7. Installation intégrée selon l'une des revendications 1 à 6, l'installation étant adaptée de telle sorte qu'une chambre de collecte (32), un four de durcissement (33), une zone de refroidissement (34) et un dispositif de sciage (35) sont agencés en aval de la machine à filer (31) afin de produire un produit en laine de roche par la machine à filer (31).

8. Installation intégrée selon la revendication 7, l'installation étant adaptée de telle sorte que l'air d'échappement provenant du four de fusion (30), de la chambre de collecte (32), du four de durcissement (33), de la zone de refroidissement (34) et du dispositif de sciage (35) peuvent chacun être acheminés vers le dispositif de combustion (1).

9. Installation intégrée selon la revendication 8, l'installation étant adaptée de telle sorte que des déchets de fibres provenant de la machine à filer (31) et de la chambre de collecte (32) ainsi que de la poussière provenant du four de durcissement (33), de la zone de refroidissement (34) et du dispositif de sciage (35) peuvent dans chaque cas être introduits dans un dispositif de traitement (6) pour traiter des déchets de fibres et de la poussière et de celui-ci peuvent être introduits dans le four de fusion (30).

10. Installation intégrée selon la revendication 9, l'installation étant adaptée de telle sorte que le dispositif de traitement (6) pour traiter la matière première et/ou un dispositif de séchage pour sécher des déchets de fibres et pour traiter la poussière peut être alimenté en chaleur perdue provenant du dispositif de combustion (1).

11. Installation intégrée selon l'une des revendications 1 à 10, l'installation étant adaptée de telle sorte que la roche basaltique ou le basalte en conjonction avec la dolomite ou la crasse, peut être fourni à l'installation de traitement de matière première (5).

12. Installation intégrée selon l'une des revendications 1 à 11, l'installation étant adaptée de telle sorte que le condensat de vapeur peut être renvoyé à la chaudière du dispositif de combustion (1) à partir du système de traitement de matière première (5), du dispositif de séchage (6) et du four de durcissement (33).

13. Installation intégrée selon l'une des revendications 1 à 12, l'installation étant adaptée de telle sorte que de l'eau d'alimentation de chaudière peut être introduite dans une chaudière dans le dispositif de combustion (1) à partir d'un dispositif de refroidissement du four de fusion.

14. Procédé pour le fonctionnement de l'installation intégrée pour l'incinération des déchets dans une installation d'incinération et pour fabriquer de la laine de roche dans une installation de fabrication de laine de roche, l'installation d'incinération ayant un dispositif de combustion (1) pour produire des produits résiduels et de la vapeur, qui est envoyée à au moins une turbine à vapeur (2), les produits résiduels de l'installation d'incinération des déchets étant au moins en partie envoyés avec des roches ou des mélanges de roches pouvant être fondus dans un four de fusion (30), le matériau de roche étant alimenté à une machine de filage (31) pour le filage de laine de roche.

15. Procédé selon la revendication 14, ou l'au moins une turbine à vapeur (2) génère de l'énergie électrique qui chauffe le four de fusion (30) conçu sous la forme d'un four de fusion électrique.

16. Procédé selon la revendication 14 ou 15, ou la chaleur perdue provenant du dispositif de combustion (1) d'une installation de traitement (5) pour traiter la roche ou un mélange de roche et/ou d'un dispositif de séchage (6) est fournie pour sécher les déchets de fibres et pour traiter la poussière.

17. Procédé selon l'une des revendications 14 à 16, ou l'air d'échappement provenant du four de fusion (30) est fourni à une chambre de collecte (32), qui est agencée en aval de la machine à filer (31), partir d'un four de durcissement (33), d'une zone de refroidissement (34) et/ou d'un dispositif de sciage (35).
